# EUROPÄISCHE PATENTANMELDUNG

(11) **EP 1 380 384 A1**
(43) Veröffentlichungstag der Anmeldung: **14.01.2004**
(21) Anmeldenummer: 03015296.1
(22) Anmeldetag: 07.07.2003
(51) Int. Cl.: B23Q 39/04, B23Q 41/02

(54) **Transferstrasse**

(30) Priorität: 09.07.2002 DE 10231017
(71) Anmelder: GROB-Werke Burkhart Grob e.K., 87719 Mindelheim (DE)
(72) Erfinder: Grob, Burkhart, Dr. h.c.mult. Dipl.-Ing., 86825 Bad Wörishofen (DE)
(74) Vertreter: Pfister, Stefan Helmut Ulrich

(57) **Zusammenfassung**

Die Erfindung betrifft eine Transferstraße, welche aus mehreren Stationen, die für die Bearbeitung von Werkstücken dienen, besteht und die Stationen durch eine Transportbahn miteinander verbunden sind, auf welcher die Werkstücke bzw. die Werkstücke tragende Werkstückträger von Station zu Station transportiert werden.

Die Erfindung zeichnet sich dadurch aus, daß zumindest eine der Stationen in sich eigensteif, vorzugsweise als Hakenmaschine ausgebildet ist und die Station mit einer autonom laufenden, die Arbeitsabläufe der Station steuernde Stationssteuerung ausgestattet ist.

## Beschreibung

Die Erfindung betrifft eine Transferstraße, welche aus mehreren Stationen, die zu der Bearbeitung von Werkstücken dienen, bestehen, und bei welcher die Stationen durch eine Transportbahn miteinander verbunden sind. Die Werkstücke werden auf der Transportbahn von Station zu Station transportiert. Die Werkstücke können dabei stückgutartig transportiert werden oder aber sie werden auf Werkstückträgern (Vorrichtungswagen, Paletten, Platten und so weiter) aufmontiert transportiert.

Transferstraßen sind im Stand der Technik hinlänglich bekannt.

Allgemein bestehen Transferstraßen aus einer Vielzahl hintereinander gereihter Bearbeitungsstationen (zum Beispiel Dreh-, Bohr-, Schleif- oder Meßmaschinen). In der Regel sind diese Maschinen als Sondermaschinen ausgebildet, das heißt, sie sind speziell für die jeweilige Bearbeitungsaufgabe ausgelegt und optimiert. Je spezieller sie auf die spezifische Aufgabe ausgerichtet sind, desto größer ist die Produktivität der Anlage, gleichzeitig sinkt aber die Flexibilität, zum Beispiel bei unterschiedlichen Fertigungsaufgaben. Es ist bekannt die Werkstücke getaktet weiterzufördern, wobei allerdings der langsamste Bearbeitungsschritt die Taktfrequenz vorgibt.

Aus der DE 196 26 581 A1 ist eine Transferstraße mit Bearbeitungsstationen bekannt. Die dort vorgestellte Lösung bezieht sich auf eine Transferstraße mit Einrichtungen zum Transport der Werkstücke entlang von Mittenständern, wobei seitlich an den Mittenständern angeordnete Seitenständer vorgesehen sind, auf denen die Bearbeitungseinheiten verfahrbar gelagert sind und mit Versorgungseinrichtungen für die Bearbeitungsstationen. Die dort vorgeschlagene Lösung soll das Problem beseitigen, daß die eigenen Versorgungsleitungen der jeweiligen Bearbeitungsstationen auf ihrem Weg zu den Steuertafeln den Transport der Werkstücke nicht behindern. Entsprechend der dort vorgeschlagenen Lösung sollen alle Versorgungsleitungen nicht, wie bisher, ober- oder unterhalb der Seiteneinheiten, sondern ausschließlich innerhalb oder im Bereich des Mittenständers angeordnet sein. In dieser bekannten Lösung wird auch vorgeschlagen, daß zur Gewährleistung eines möglichst vollkommmenen modulhaften Aufbaus jeder Takteinheit möglichst unabhängig von anderen Takteinheiten, zumindest in den Hauptleitungen für Hydraulik, Schmierung, Pneumatik usw., möglichst aber auch in den Kabelkanälen und Stromschienen, Absperreinrichtungen oder Steckverbindungen angeordnet werden sollen. Dabei wird in der Lösung nach der DE 196 26 581 A1 das Konzept, die einzelnen Bearbeitungsstationen als Vielzahl hintereinander gereihter Bearbeitungsstationen vorzusehen, nicht aufgegeben. Damit sind die zuvor beschriebenen Nachteile bezüglich der Produktivität und Flexibilität auch bei der hier vorgeschlagenen Lösung vorhanden.

Aus der Druckschrift DE 198 49 374 A1 ist ein Produktionssystem zur Werkstückfertigung bekannt. Das hier vorgeschlagene Produktionssystem soll sich dadurch auszeichnen, daß das Produktionssystem selbst modular aufgebaut ist, wobei ein Modul jeweils umfasst: eine Maschine, zwei Verschiebetische, wobei die Maschine zwischen den Verschiebetischen angeordnet ist und einen Übergabetisch, der die Verschiebetische mit der Maschine verbindet. Auch in dieser Lösung sind keine Vorschläge darüber angeführt, die von der Spezialisierung der einzelnen Bearbeitungsstationen wegführen.

Aus der Druckschrift DE 199 48 189 A1 ist ein flexibles Fertigungssystem bekannt, welches sich dadurch auszeichnet, daß unterschiedliche Werkzeugmaschinenarten mehrfach redundant vorgesehen sind und jeder Werkzeugmaschine dann ein Werkstückspeicher vorgelagert ist, wobei die nummerische Steuerung des Transportsystems den Füllstand des Werkstückspeichers zu bestimmen vermag und in Abhängigkeit des Füllstandes die bearbeiteten Werkstücke in den Werkstückspeicher einer bestimmten Maschine gelenkt werden. Auch zum Aufbau eines derartigen Fertigungssystems sind unterschiedlichste spezialisierte Bearbeitungsmaschinen erforderlich, die den Aufwand einer Fertigungslinie erhöhen und die den bereits vorher beschriebenen Fertigungslinien zuzuordnen sind, die getaktet arbeiten, wobei der langsamste Bearbeitungsschritt die Taktfrequenz dann vorgibt.

Da die Transferstraße als Sondermaschine auf den jeweiligen Anwendungszweck eingerichtet ist, ist auch der Aufbau der einzelnen Stationen höchst unterschiedlich. Dies führt dazu, daß auch jede einzelne Station als Sondermaschine konzipiert wird und auch das Aufstellen der gesamten Transferstraße in der Produktionshalle entsprechend aufwendig ist. Auch wird die Transferstraßensteuerung für diesen einen, speziellen Anwendungsfall konzipiert und ist ebenfalls verhältnismäßig unflexibel, im Fall, daß Änderungen durchzuführen sind.

Die vorliegende Erfindung hat es sich zur Aufgabe gemacht, Transferstraßen, wie eingangs beschrieben, dahingehend zu verbessern, daß diese kostengünstiger und flexibler werden.

Zur Lösung dieser Aufgabe geht die Erfindung aus von einer Transferstraße wie eingangs beschrieben und schlägt vor, daß zumindest eine der Stationen in sich eigensteif ausgebildet ist und die Station mit einer autonom laufenden die Arbeitsabläufe der Station steuernde Stationssteuerung ausgestattet ist.

Die Erfindung schlägt ein komplett neues Vorgehen bei der Konstruktion von Transferstraßen vor. An Stelle aufwendige, auf den Spezialfall spezialisierte Sondermaschinen zu realisieren, wird eine Station vorgeschlagen, die vorzugsweise modulartig ausgebildet ist und autark ist. Die Autarkie beziehungsweise Autonomie der Stationen wird unter anderem auch dadurch erreicht, daß eine Stationssteuerung vorgesehen wird, die nur die Arbeitsabläufe für die Station selber und gegebenenfalls den Ein- und Weitertransport des Werkstückes überwacht. Da weiterhin eine eigenstreife Station vorgeschlagen wird, diese soll im Prinzip als Hakenmaschine werksseitig bereits fertig montiert und lauffähig in die Produktionshalle geliefert werden, wird auch der Aufbauaufwand deutlich reduziert, da die Maschinen bereits auf Funktion geprüft, sowohl bezüglich der Mechanik als auch der Steuerung, zur Auslieferung gelangen. Dies bedeutet, daß die Bearbeitungsstation komplett als eigenständige Maschine fertiggestellt ist und dann verladen werden kann, um zu dem späteren Einsatzort transportiert zu werden. Die Bearbeitungsmaschine kann daher, einmal fertiggestellt, an den Haken eines Hebezeuges angehängt und verladen bzw. abgeladen werden. Ein einfacher Austausch der Station ist in gleiche Weise gegeben. Der modulartige Aufbau schließt einen eigensteifen, selbsttragenden Aufbau nicht aus. Vielmehr wurden hier die Vorteile der Eigensteifheit und des modularen Aufbaus in Kombination und in einer Ausführungsform der Erfindung genutzt. Gemäß dem erfindungsgemäßen Vorschlag wird auf den aufwendigen Aufbau der Station selber in der Stationshalle bewußt verzichtet, um die Montagezeiten der Transferstraße entsprechend zu reduzieren, was zur Kostensenkung beiträgt.

Das Konzept sieht weiterhin vor, die einzelnen Stationen als Standardmaschine in großer Stückzahl bauen zu können. Letztendlich sind die vorzunehmenden Bearbeitungen in einer Transferstraße immer sehr ähnlich, das bedeutet, daß das Werkstück gespannt, bezüglich der Bearbeitungseinheit, in der Regel einer Werkzeugspindel, positioniert und von dieser (zum Beispiel spanabhebend) bearbeitet werden muß. Wird aber der Aufbau für die Station standardisiert, insbesondere eine von sich aus eigensteife Station realisiert, so müssen auf sonstige Begebenheiten weniger Rücksicht genommen werden, da von vorneherein klar ist, welche Grundanforderungen (die gegebenenfalls verhältnismäßig hoch sind) an die jeweilige Station zu stellen sind, die als Serienmaschine produziert wird. Gelingt es aber für komplexe, in der Regel höchst individuelle Arbeiten, steuerungstechnisch speziell angepaßte Serienmaschinen einzusetzen, so wird der Aufwand für die Herstellung einer solchen Transferstraße deutlich verringert, da der konstruktive Aufwand sinkt. Der programmtechnische beziehungsweise steuerungstechnische Aufwand wird von der Transferstraßensteuerung weg zur entsprechend intelligenteren Stationssteuerung hin verlagert. Aber auch dort ist eine entsprechende Schematisierung möglich, da auch in der Stationssteuerung gewisse Arbeitsabfolgen standardisiert immer wieder erfolgen und eigentlich nur die tatsächliche Bearbeitung von Station zu Station unterschiedlich ist. Die Schritte, Werkstück einfahren, Werkstück positionieren, Werkstück ausfahren und wieder freigeben, bleiben in der Regel bei allen Stationen gleich.

Überraschenderweise erreicht die Erfindung nicht nur einen Vorteil bei dem Aufbau einer entsprechenden Transferstraße. Da das Konzept der Transferstraße so vorgesehen ist, daß die Transferstraße aus möglichst vielen autonomen, also autark laufenden Stationen besteht, ist auch ein Umbau der Transferstaße in einfachster Weise möglich. Hieraus ergeben sich für den Betreiber entscheidende Vorteile. Für den Fall, daß zum Beispiel eine Station defekt ist oder die Transferstraße verlängert oder umgebaut werden muß, wird einfach das entsprechende Stationsmodul herausgenommen und durch ein entsprechend passendes ersetzt oder eine entsprechend passende Station in der Transferstraße ergänzt. Da keine den kompletten Bearbeitungsprozeß der Transferstraße überwachende und dominierende Transferstraßensteuerung vorgesehen ist, sondern diese dezentral auf die jeweiligen Stationssteuerungen verteilt ist, ist ein entsprechender Umbau auch für den Betreiber in einfacher und daher auch kostengünstiger Weise möglich.

In einer bevorzugten Variante der Erfindung wird vorgeschlagen, daß jede Station mit je einem Transferantrieb ausgestattet ist beziehungsweise jeder Station ein Transferantrieb zugeordnet ist. Neben der Bearbeitung eines Werkstückes ist auch der Weitertransport des Werkstückes zwischen den einzelnen Stationen in der Transferstraße sehr wichtig. Um auch hier ein hohes Maß an Autonomie zu erreichen, kümmert sich jede Station auch eigenständig um den Transferantrieb des Werkstückes. Hierzu kann zum Beispiel vorgesehen sein, daß jede Station selber einen entsprechenden Transferantrieb aufweist oder aber, zum Beispiel wenn der Transferantrieb an der Transportbahn, die eigentlich getrennt von der Bearbeitungsstation angeordnet sein kann, daß jeder Station ein Transferantrieb zugeordnet ist. Letztendlich erfasst dabei die Stationssteuerung gegebenenfalls nicht nur die Funktionalitäten der Stationen alleine sondern sorgt auch gleichzeitig für einen möglichst reibungslosen An- und Abtransport der Werkstücke auf der Transportbahn.

Es ergibt sich daher, daß der Transferantrieb für einen Transport des Werkstückes auf der Transportbahn sorgt, wobei hier nicht unterschieden wird zwischen Einführ- oder Ausführtransportbahn, dies kann entsprechend dem prinzipiellen Transferstraßenkonzept entschieden werden. Zum Beispiel können auch bei langen Transportbahnen, die zwei Stationen verbinden, die Zuständigkeiten für diese Transportbahn zwischen den beiden angeordneten Stationen aufgeteilt sein. Dies ist durch entsprechende Blockbildung problemlos möglich.

Günstigerweise werden die Werkstücke auf Werkstückträgern aufgebaut. Der Einsatz von Werkstückträgern erlaubt ein verhältnismäßig einfaches Hantieren beziehungsweise Handling der Werkstücke in der Transferstraße. Hierzu sind verschiedene Konzepte bekannt. Als Werkstückträger kann zum Beispiel ein Vorrichtungswagen, eine Palette, eine Platte oder dergleichen vorgesehen sein. Die Erfindung ist aber in gleicher Weise auch bei Anordnungen einsetzbar, bei welchen das Werkstück direkt auf der Transportbahn gefördert wird und auf den Einsatz eines Werkstückträgers verzichtet wird.

In einer bevorzugten Ausgestaltung der Erfindung ist vorgesehen, daß die Transferantriebe der verschiedenen Stationen voneinander unabhängig eine Bewegung des jeweils zu transportierenden Werkstückes beziehungsweise Werkstückträgers bewirken. Hierdurch wird eine Entkoppelung der jeweiligen Transferbewegungen auf den Transportbahnen erreicht. Die Flexibilität aber auch die Produktivität einer so ausgestalteten erfindungsgemäßen Transferstraße wird erhöht. Im Fall einer Störung wird nicht die komplette Transferstraße angehalten, sondern es stauen sich vor der Bearbeitungsstation, die die Störung hat, die zu bearbeitenden Werkstücke, die anderen Bearbeitungsstationen bleiben nach wie vor noch in Arbeit. Hieraus ergibt sich auch, daß die zwei Stationen verbindende Transportbahn als Puffer für Werkstücke beziehungsweise Werkstückträger dient.

Es ist günstig, wenn an der Station eine Einzugs- beziehungsweise Ausschiebeeinrichtung vorgesehen ist, die insbesondere für eine Positionierung des Werkstückes beziehungsweise Werkstückträgers in der Station dient. Es ist zum Beispiel möglich, daß das Werkstück beziehungsweise das auf dem Werkzeugträger montiere Werkstück in der Bearbeitungsstation auf einen speziellen Bearbeitungstisch aufgespannt wird und daher eine entsprechend genaue Positionierung im Vorfeld benötigt wird. Es ist daher günstig, in diesem Bereich eine exakt funktionierende Einzugseinrichtung vorzusehen. Dabei kann die Einzugseinrichtung gleichzeitig nach Abschluß der Bearbeitung die Ausschiebefunktion übernehmen und das Werkstück/Werkstückträger in den Bereich der Transportbahn abbewegen. Günstigerweise wird dabei eine Lagerung des Werkstückträgers auf Gleitleisten vorgeschlagen, um eine möglichst hohe Positioniergenauigkeit zu erreichen. Bei einer Lagerung auf Rollen besteht bei exzentrischer Lagerung der Rollen eine gewisse Versatzgefahr des aufgelegten Werkstückes, auch bei Stillstand des Antriebes, was zu entsprechenden Positionsungenauigkeiten führen könnte.

Ein weiterer Vorteil der Erfindung liegt darin, daß die Transportbahn direkt an dem Gestell der Station anschließt. Die Transferstraße wird so konzipiert, daß auf zusätzliche Gestelle für die Transportbahn verzichtet werden kann, was natürlich den Aufwand und auch die Zugänglichkeit einer Transportbahn entsprechend begünstigt. Da das Gestell sowieso eine hohe Stabilität wegen der geforderten Eigensteifigkeit der Station aufweist, ist es problemlos möglich, daran auch die Transportbahn direkt anzuschließen. Dies geht einher mit entsprechend geringem Aufwand für die Montage, da entsprechende Montagehilfen am Gestell gleich vorgehalten werden können.

Es ist günstig, wenn die Transportbahn mit angetriebenen Rollen oder Friktionsrollen oder dergleichen ausgestattet ist. Dieses Konzept hat sich für den Transport von Werkstückträgern beziehungsweise Werkstücken bereits bewährt. Sie erlauben auch eine Bewegung des Werkstückträgers über eine lange Strecke mit verhältnismäßig geringem Aufwand, wobei auch eine abschnittsweise Steuerung der Rollen möglich ist. Alternativ ist es möglich, entsprechende Band- oder Spindelantriebe vorzusehen.

Die in der Regel autonom agierende Stationssteuerung hat eine Vielzahl unterschiedlicher Aufgaben zu erfüllen. Der Stationssteuerung ist es im Sinne der Erfindung natürlich möglich, zusätzliche Informationen von der Transferstraßensteuerung zu erhalten, zum Beispiel wenn es um die speziellen Bearbeitungskonditionen geht, können diese aus einem zentralen Datenregister der Transferstraßensteuerung an die jeweilige Stationssteuerung übergeben werden. Jedoch ist es für die Transferstraßensteuerung unerheblich, wie der einzelne Bearbeitungsschritt und auch der Transport der einzelnen Werkzeugträger vor Ort erfolgt. Dies ist günstiger in der Stationssteuerung eingebaut. Daher wird vorgeschlagen, daß die Stationssteuerung auch den einlaufenden Transport überwacht. Dies dient dazu der Station mitzuteilen, wenn eine entsprechende weitere Bearbeitung ansteht.

Des Weiteren ist es günstig, wenn die Stationssteuerung die Bearbeitung von Werkstücken unterbricht, wenn fertig bearbeitete Werkstücke nicht auf die ablaufende Transportbahn ausförderbar sind. Ergibt es sich, daß in den ablaufenden Transportbahnen ein Stau entsteht, so kann natürlich ein nachfolgendes Werkstück nicht bearbeitet werden. Dies tritt natürlich dann auf, wenn zum Beispiel die Staukapazität der nachgeschalteten Transportbahn aufgebraucht ist und das fertig bearbeitete Werkstück nicht austransportiert werden kann. In diesem Fall muß die Steuerung dies erkennen und ein weiteres Einfördern von bereits angeförderten Werkstücken so lange zurückstellen, bis die Station wieder frei ist. Es reicht daher völlig aus, sicherzustellen, daß das fertig bearbeitete Werkstück ausgefördert ist. Auf eine zusätzliche Überwachung der nachfolgenden Transportbahn, die ja das Einlaufband für die nachfolgende Station ist, kann in diesem Fall verzichtet werden.

Jedoch werden wiederum Schnittstellen definiert, die mit dem prinzipiellen modularen Gedanken der Erfindung konform sind und auch den oben geschilderten Vorteilen im Bezug auf Flexibilität entsprechen.

In einer bevorzugten Ausgestaltung der Erfindung wird vorgesehen, daß die Station ein Gestell aufweist, welches die Bearbeitungseinheit und gegebenenfalls einen Werkstückschlitten beziehungsweise Werkstückbearbeitungstisch aufnimmt. Die Station, welche vorteilhafterweise modular ausgebildet ist, weist alle Elemente auf, um eine Bearbeitung prinzipiell ausführen zu können. Natürlich ist es möglich für komplexere Bearbeitungen an dieser Serienmaschine ein Detail zu ändern, um zusätzliche Funktionen zu ermöglichen, jedoch wird versucht konsequent das Konzept des Einsatzes einer in Serie gefertigten Station aufrecht zu erhalten, um die eingangs geschilderten Vorteile möglichst vollständig ausnützen zu können. Daher ergibt es sich, daß neben dem ausreichend stabil ausgebildeten eigensteifen Gestell die Station auch die sonstigen notwendigen Einheiten aufweist, die für eine Bearbeitung des Werkstückes vonnöten sind.

In der bevorzugten Variante ist vorgesehen, daß das Gestell einteilig ist. Natürlich ist es möglich, das Gestell aus mehreren Teilen zusammenzusetzen und ein einteiliges Gestell zu schaffen. Es ist aber beabsichtigt, das Gestell nicht wieder in seine Einzelteile zerlegen zu müssen, um einen Umbau oder ein Versetzen der Station durchzuführen.

Ein wesentlicher Vorteil einer erfindungsgemäßen Variante liegt darin, daß die Station modulartig ausgebildet und eigenständig funktionsfähig beziehungsweise transportfähig ist. Diese Eigenschaften wurden an anderen Stellen bereits angesprochen. Gerade weil angestrebt wird, die Station breitbandiger aber nicht zu hochspezialisiert für verschiedene Anwendungszwecke auszurichten und trotzdem durch eine spezielle Steuerung auch individuell komplexe Bearbeitungen zu ermöglichen, wird erreicht, daß die Station als solche modulartig ausbaubar ist, zum Beispiel, wenn eine entsprechende Reparaturmaßnahme durchzuführen ist. Einfach gesprochen ist dabei nur die Station aus der Transferstraße herauszulösen, das heißt, die jeweiligen Transportbahnen abzubauen beziehungsweise zu lösen, die Station selber vom Fundament zu lösen und die notwendigen Versorgungszuleitungen abzusperren. Dann kann die Station zum Beispiel durch einen Kran am Haken aufgenommen und heraustransportiert werden. Ist die Station eigenständig funktionsfähig, so kann ihre Funktion auch einzeln überprüft beziehungsweise genützt werden. Dadurch erhöht sich die Flexibilität der erfindungsgemäßen Transferstraße ungemein.

In einer bevorzugten Variante der Erfindung ist vorgesehen, daß die Werkstückträger beziehungsweise die Werkstücke Datenträger aufweisen, welche Informationen über das Werkstück beziehungsweise über die an dem Werkstück durchzuführende Bearbeitungen trägt und die Stationssteuerung diese Daten aus einem Lesegerät, welches den Datenträger ausliest, erhält. Prinzipiell erlaubt die erfindungsgemäße Transferstraße auch eine flexible Fertigung. Dies führt aber dazu, daß bei einer flexiblen Fertigung der Einsatz gewisser Bearbeitungsstationen vielleicht nicht benötigt wird. Da aber auf den Einsatz einer komplexen Transferstraßensteuerung verzichtet wird, diese ist im Wesentlichen dezentral auf die verschiedenen Stationssteuerungen verteilt, muß natürlich der jeweiligen Station mitgeteilt werden, welches Werkstück beziehungsweise welche Bearbeitung an dem Werkstück jetzt ausgeführt werden soll. Dies wird in einfacher Weise dadurch erreicht, daß dem Werkstück beziehungsweise Werkstückträger ein Datenträger mitgegeben wird, auf dem die jeweiligen Informationen hinterlegt sind. Hierfür sind verschiedene Varianten und Konzepte bekannt. Es können Transponder- oder Barcode-Anwendungen sein, oder aber auch Anwendungen, bei denen ein Datenchip ausgelesen wird. Die Bearbeitungsinformation mag sich dabei aus der Stationssteuerung ergeben oder aber die Transferstraßensteuerung hält entsprechende Datenbanken vor, die diese bei Bedarf an die jeweilige Station und deren Stationssteuerung liefert.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Transferstraße, welche aus mehreren Stationen besteht, die für die Bearbeitung von Werkstücken dienen, und die Stationen durch eine Transportbahn miteinander verbunden sind, auf welcher die Werkstücke beziehungsweise die die Werkstücke tragende Werkstückträger von Station zu Station transportiert werden, **dadurch gekennzeichnet, daß** zumindest eine der Stationen in sich eigensteif, vorzugsweise als Hakenmaschine ausgebildet ist und die Station mit einer autonom laufenden, die Arbeitsabläufe der Station steuernde Stationssteuerung ausgestattet ist.

2. Transferstraße nach dem vorhergehenden Anspruch 1, **dadurch gekennzeichnet, daß** jede Station mit je einem Transferantrieb ausgestattet ist beziehungsweise jeder Station ein Transferantrieb zugeordnet ist.

3. Transferstraße nach einem oder beiden der vorhergehenden Ansprüche, **dadurch gekennzeichnet, daß** die Stationssteuerung neben speziellen Arbeitsabläufen der Station schematisierte Arbeitsabfolgen überwacht und steuert und / oder die Stationssteuerung als intelligente Stationssteuerung ausgebildet ist.

4. Transferstaße nach einem oder mehreren der vorhergehenden Ansprüche, **dadurch gekennzeichnet, daß** der Transferantrieb für einen Transport des Werkstückes auf der Transportbahn sorgt und / oder die Transferantriebe der verschiedenen Stationen derart ausgebildet sind, daß Sie voneinander unabhängig eine Bewegung des jeweils zu transportierenden Werkstückes beziehungsweise Werkstückträgers bewirken.

5. Transferstraße nach einem oder mehreren der vorhergehenden Ansprüche, **dadurch gekennzeichnet, daß** die Werkstücke auf Werkstückträgern aufgebaut sind.

6. Transferstraße nach einem oder mehreren der vorhergehenden Ansprüche, **dadurch gekennzeichnet, daß** an der Station eine Einzug- beziehungsweise Ausschiebeeinrichtung vorgesehen ist, die insbesondere für eine Positionierung des Werkstückes beziehungsweise Werkstückträgers in der Station dient.

7. Transferstraße nach einem oder mehreren der vorhergehenden Ansprüche, **dadurch gekennzeichnet, daß** Gleitleisten für die Lagerung des bzw. der Werkstückträger vorgesehen sind.

8. Transferstraße nach einem oder mehreren der vorhergehenden Ansprüche, **dadurch gekennzeichnet, daß** die Einzugbeziehungsweise Ausschiebeeinrichtung auch als Transferantrieb dient.

9. Transferstraße nach einem oder mehreren der vorhergehenden Ansprüche, **dadurch gekennzeichnet, daß** die zwei Stationen verbindende Transportbahn als Puffer für Werkstücke beziehungsweise Werkstückträger dient.

10. Transferstraße nach einem oder mehreren der vorhergehenden Ansprüche, **dadurch gekennzeichnet, daß** die Transportbahn direkt an dem Gestell der Station anschließt und/oder die Transportbahn mit angetriebenen Rollen oder Friktionsrollen oder dergleichen ausgestattet ist.

11. Transferstraße nach einem oder mehreren der vorhergehenden Ansprüche, **dadurch gekennzeichnet, daß** die Stationssteuerung auch die einlaufende Transportbahn überwacht und / oder die Stationssteuerung die Bearbeitung von Werkstücken unterbricht, wenn fertig bearbeitete Werkstücke nicht auf die ablaufenden Transportbahn ausförderbar sind.

12. Transferstraße nach einem oder mehreren der vorhergehenden Ansprüche, **dadurch gekennzeichnet, daß** die Stationssteuerung erst ein neues, zu bearbeitendes Werkstück einfördert, wenn die Station frei ist und / oder die Stationssteuerung überwacht, daß fertige, bearbeitete Werkstücke auch ausgefördert werden.

13. Transferstraße nach einem oder mehreren der vorhergehenden Ansprüche, **dadurch gekennzeichnet, daß** die Station ein Gestell, vorzugsweise ein einteiliges Gestell, aufweist, welches die Bearbeitungseinheit und gegebenenfalls einen Werkstückschlitten beziehungsweise Werkstückbearbeitungstisch aufnimmt und / oder die Station modulartig ausgebildet und eigenständig funktionsfähig und/oder transportfähig ist und / oder die Station als Serienmaschine für unterschiedliche Anwendungen ausgerichtet ist und eine Anpassung für die jeweilige Bearbeitungsaufgabe durch die Stationssteuerung erfährt.

14. Transferstraße nach einem oder mehreren der vorhergehenden Ansprüche, **dadurch gekennzeichnet, daß** die Werkstückträger oder die Werkstücke Datenträger aufweisen, welche Informationen über das Werkstück beziehungsweise über an dem Werkstück durchzuführende Bearbeitungen trägt und die Stationssteuerung diese Daten aus einem Lesegerät, welches den Datenträger ausliest, erhält.
